# EUROPEAN PATENT SPECIFICATION

(11) **EP 1 470 036 B1**
(45) Date of publication and mention of the grant of the patent: **31.08.2005**
(21) Application number: 03700636.8
(22) Date of filing: 03.01.2003
(51) Int. Cl.: B62D 1/19, F16F 7/12

(54) **A DEVICE FOR ABSORBING KINETIC ENERGY**
VORRICHTUNG ZUM ABSORBIEREN KINETISCHER ENERGIE
DISPOSITIF PERMETTANT D'ABSORBER L'ENERGIE CINETIQUE

(30) Priority: 04.01.2002 SE 0200018
(43) Date of publication of application: 27.10.2004
(73) Proprietor: Tidamek AB, 522 23 Tidaholm (SE)
(72) Inventor: ALLERT, Bengt, Thore, S-521 31 Falköping (SE); CARLSSON, Henry, S-531 41 Lidköping (SE)
(74) Representative: Westman, Per Börje Ingemar
(86) International application number: PCT/SE2003/000007
(87) International publication number: WO 2003/066413

(56) References cited:
- EP-A1- 0 641 705
- US-A- 3 779 591
- US-A- 4 786 076
- US-A- 5 417 452
- US-B1- 6 241 284

## Description

The present invention refers to a device intended for absorbing kinetic energy, at systems, which are subjected to stress at collision.

Particularly, the invention refers to a device adapted to absorb kinetic energy, which is present in a steering column of a vehicle and which is released when the steering wheel at an abrupt retardation, such as at a collision against a rigid barrier, strives to keep on moving forward and also the force to which the steering wheel is subjected when it is hit by the body of a vehicle driver.

When a vehicle is subjected to an abrupt braking action, e.g. at a collision, the steering wheel, which is pointing towards the chest of the driver, will be hit by the driver, when he due to his kinetic energy will move on in forward direction towards the steering wheel. In order to minimize the damages to the chest of the driver, as far as possible, it is desirable, to provide some form of efficient and resilient braking of the living force, which hits the steering wheel.

For this purpose the steering column which supports the steering wheel, or its attachment in the chassis of the vehicle, earlier has often been designed with two packs of slabs arranged longitudinally to each other, whereby the slabs in one of the packs with their ends in comb-form engage between the corresponding ends in the other pack, and which ends are mutually squeezed between each other by means of a bolt joint or the like, which creates a friction joint, which, when subjected to a heavy impact substantially in the longitudinal direction of the slabs, will give a braking effect, at the same time as it will permit the two packs of slabs under energy absorbtion to pivot about each other and the joint under energy absorbtion caused by the friction force of the joint.

Such earlier known braking devices consist of several mutually interconnected components, and it is furthermore difficult to obtain an adjustment of the energy absorbing effect to a level adapted to the body posture and weight of the individual driver.

US-A-3 779 591 describes a device for absorbing kinetic energy at bumper systems of a vehicle according to the features of the preamble of claim 1, incorporating at least a first part and a second part, whereby the first and the second parts under influence of a collision force are arranged to make a mutual movement, whereby this movement at least partly causes a cutting in at least one contact zone between said first and second parts, thus that one of the parts retards the other part by means of cutting of material.

Another complication in these respects is the ever more usual design with adjustable inclination of the steering columns.

EP-A-0 641 705 discloses a latch device, which incorporates a first and a second part, whereby the first part is constituted by a part movably arranged internally on the latch device, and provided with a toothed joint, whereas the second part is constituted by the remaining part of the latch device.

### PURPOSE OF THE INVENTION

The purpose of the present invention is to provide a device of the type initially described, which consists of comparatively few components, gives a high degree of safety for efficient energy absorbtion, and permits an individual accommodation after the driver and is easy to adapt to a steering column, which is adjustable about a pivot point or axis, and such a device has been provided in that the first and the second parts are pivotably inter-connected, and that the device incorporates a latch device, which in turn incorporates the first and the second part, whereby the first part is constituted by a part movably arranged internally on the latch device and provided with a toothed joint, and the other part is constituted by the remaining part of the latch device.

### BRIEF DESCRIPTION OF THE DRAWINGS

Hereinafter the invention will be further described in a non-limiting manner with reference to the accompanying drawings, in which:
- Fig. 1: is a side view of a steering column device and a device according to the invention in a first embodiment, incorporating a latch device, a bearing housing and a prism portion,
- Fig. 2: is a side view of the device according to Fig. 1 as seen from the opposite side surface,
- Fig. 3: is a perspective view of a portion of the bearing housing according to Fig. 1, which shows the bearing housing as seen obliquely from the right hand side in Fig. 1,
- Fig. 4: is a perspective view of a portion of the latch device, which shows the side of the latch device facing the bearing housing and cooperating therewith,
- Fig. 5: is a perspective view of a portion of the device according to the invention with bearing housing as seen obliquely from the front in connection to the steering column, with an external bracket, which constitutes the latch device with the toothed joint provided between the latch device and the bearing housing according to Figs. 1 -4,
- Fig. 6: is a view as seen from above, and which shows a device according to the invention, showing the prism portion in connection to the steering column in accordance with the invention.

### DETAILED DESCRIPTION OF THE INVENTION

The invention is implemented in a preferred embodiment in connection to an adjustment device for a steering column, preferably for heavy vehicles such as trucks. However, the invention is not limited to trucks but can be used also in other types of vehicles, for instance passenger cars, construction machines, but also in other applications in separate motors, etcetera. Furthermore the invention can be implemented in connection to other systems than vehicle steering wheels, where it is desirable to adjust the ability of absorbing kinetic energy, particularly at an abrupt retardation, such as at a collision.

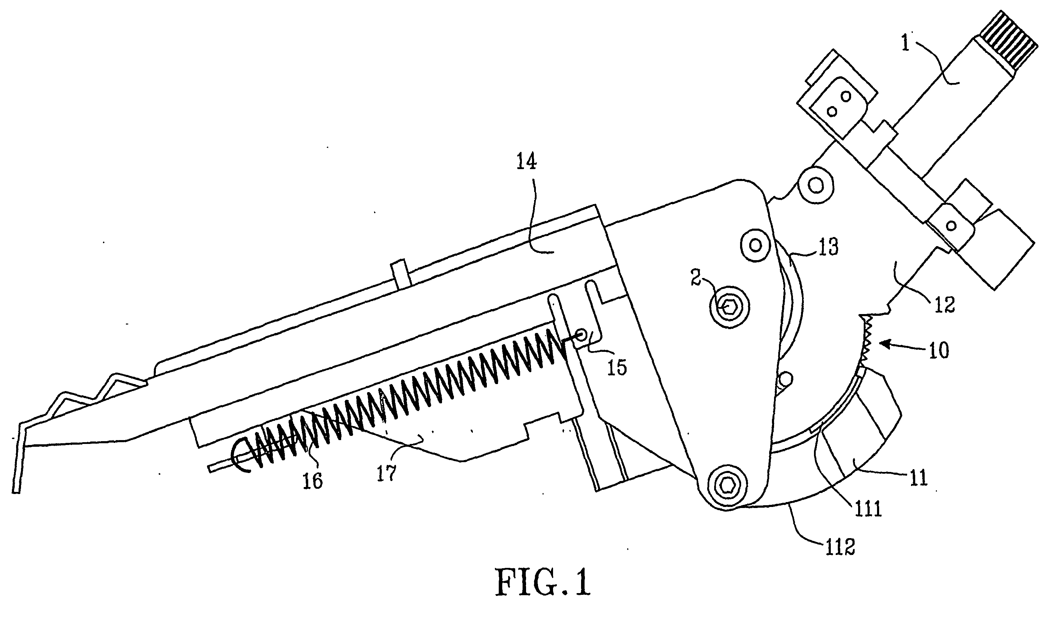

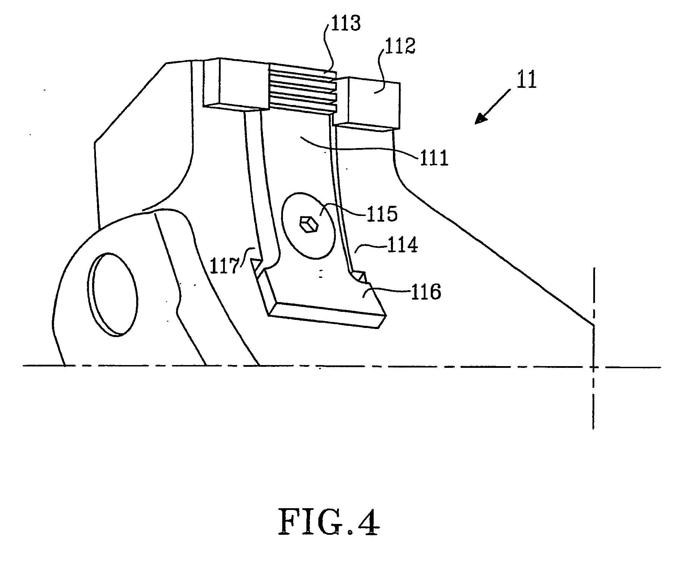

Fig. 1 shows a side view of a steering column 1 for a truck, and the components essential for a device 10 according to the invention, arranged in connection to the steering column. The device 10 incorporates in a preferred embodiment, i.a. a latch device 11, a bearing housing 12, a spiral spring 13, an attachment panel 14, a prism panel 15, a tension spring 16 and an attachment prism panel 17. The latch device 11 is attached to a lower, underlying part of the bearing housing 12 by means of a connecting element, such as a screw. The bearing housing 12 in turn is rigidly connected to the steering column 1. At the lower end of the bearing housing 12 is provided the spiral spring 13, which is arranged in connection to a tilt centre, which serves as a substantially horizontal turning axis 2 for the steering column 1. The bearing housing 12 and the steering column 1 itself, thus are pivotable as a unit about the turning axis 2, which is then positioned at right angle to the longitudinal axis of the steering column 1. The steering column 1 is adjustable in this manner not only regarding its inclination against the horizontal, but also in vertical direction. The same end of the bearing housing 12 is also movably arranged in connection to the projecting lower part of the prism panel 15. The attachment panel 14 is fixedly arranged along the upper side of the prism panel 15 and its end facing away from the steering column is fixedly attached to the car body (not further shown) of the vehicle. The prism part 15 is elongated and is arranged with one of its ends in connection to the lower overlaying part of the bearing housing 12. The attachment prism panel 17 is arranged along a part of the lower side of the prism part 15. Further parts incorporated in steering wheel and steering column 1, which are obvious for the man skilled in the art, but which are not essential for the invention, are not described more in detail here. The latch device 11 incorporates a first part 111 and a second part 112, as will be further described with reference to Fig. 4.

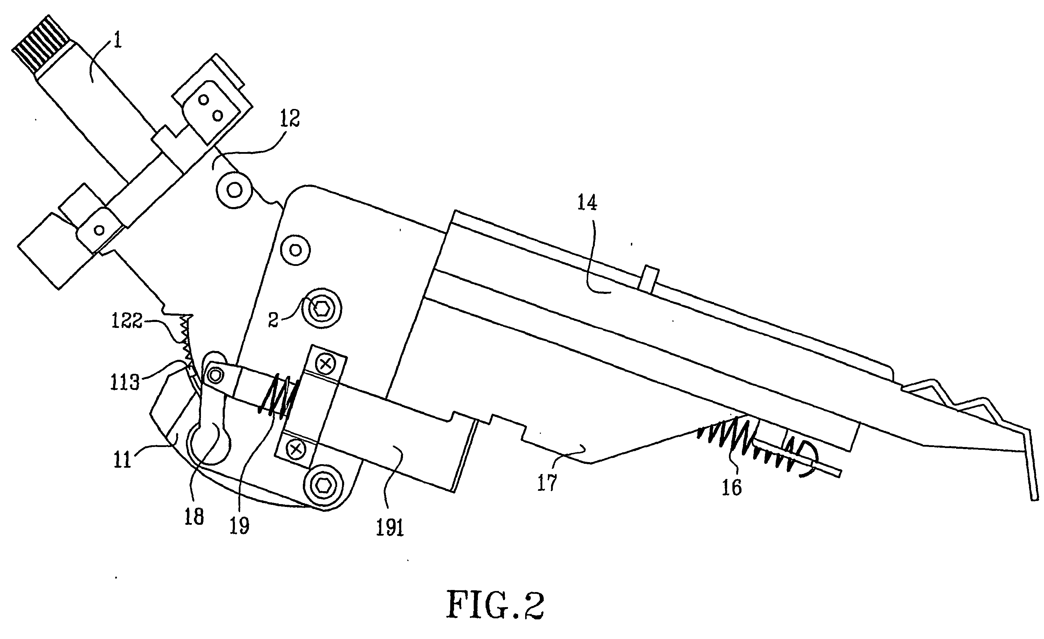

Fig. 2 shows the device according to Fig. 1 in a side view from the opposite side as compared to Fig. 1, and from which can be seen that the latch device 11 and the bearing housing 12 are interconnected by means of the toothed connection, which is constituted by the toothed portions of the latch device 11 and the bearing housing 12. An eccentric member 18, contributes in a preferred embodiment In urging these toothed portions to a firm mutual engagement, even if such an engagement can be obtained also without the eccentric member 18.

Thus the eccentric member 18 is intended to increase the retaining force for the toothed connection, which consists of a toothed portion 113 on the latch device 11, and a second toothed portion 122 on the bearing housing 12, thus that the connection does not unmesh when acted upon by a collision force. In this case the eccentric member 18 is arranged so that it extends internally between the latch device 11 and the lower underlying part of the bearing housing 12. However, in other embodiments of the invention, it is also possible to ascertain that the toothed connection 113, 122 for adjustment of the steering wheel position in vertical direction, is maintained in a firm engagement in other manners than by means of said eccentric member 18.

A spring 19 is provided in a casing 191 in connection to the bearing housing 12. The spring 19 acts upon the eccentric member 18 and therefore on the toothed connection 113, 122 thus that this is maintained in firm engagement. When adjusting the inclination of the steering wheel in vertical direction the action of the spring 19 on the eccentric member 18 is terminated, e.g. by means of an air cylinder (not further shown), whereby it is possible to cause the engagement between the toothed portions 113 and 122 to be abrogated, whereupon the steering column can be tilted thus that an adjustability in vertical direction is permitted. After a desired adjustment of the position of the steering column regarding its inclination and vertical level, it is possible again to bring the toothed connection 113, 122 to a firm engagement by relieving the air cylinder, which means that the spring 19 will again act upon the eccentric member 18 and thereby preload the toothed connection 113, 122.

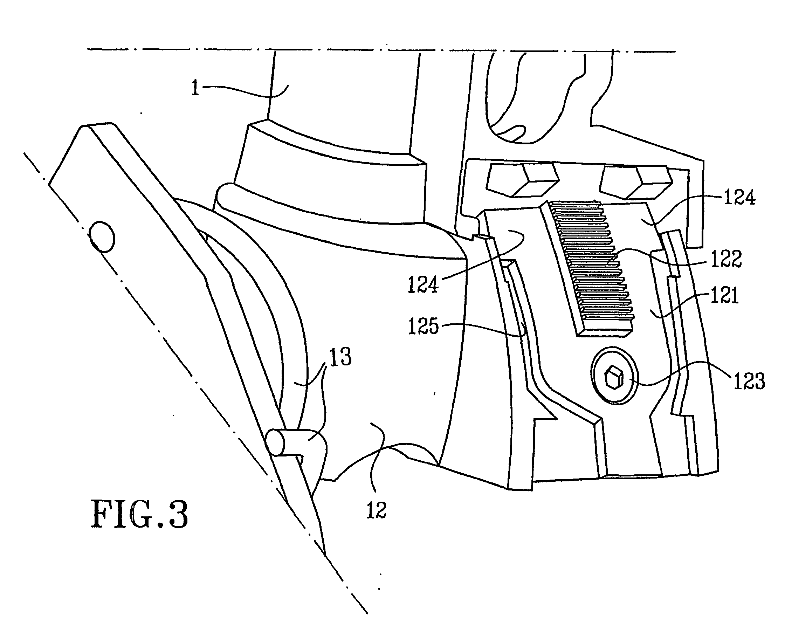

Fig. 3 shows in perspective a portion of the bearing housing 12 and the steering column 1, as seen from the right hand side in Fig. 1, and with the latch device 11 removed. As can be seen from this view the bearing housing 12 has an external part 121, which is provided with an external toothed portion 122, which corresponds to and is intended to cooperate with the toothed portion 113 at the first part 111, which is moveable internally on the latch device 11. After assembly, the bearing housing 12 is fixedly arranged on the external part 121, by means of at least a joint 123, e.g. a screw, which is arranged to break at a collision force of sufficient magnitude in accordance with what is said above. The external part 121 of the bearing housing 121 is provided with projecting edges 124 at both its longitudinal sides.

Fig. 4 shows in a perspective view a portion of the latch device 11, which as can also be seen from Fig. 1, incorporates a first part 111 and a second part 112. The first part 111 is affixed to the second part 112 by means of a connecting member, such as a screw 115, but if the screw breaks under large impact stresses, which for instance can follow from a collision, the first part 111 is movably arranged in a recess in the second part 112, and on its side turned outwards, the first part is provided with an external toothed portion 113. The second part 112 forms the base of the latch device 11 and the recess in the goods 114 in the latch device 11 forms a longitudinal groove in which the first part 11 thus is movable in longitudinal direction of the latch device 11. Along a portion of both its longitudinal sides, the first part 111 is provided with projecting edges 116 with flutes, which give the projecting edges 116 a good strength.

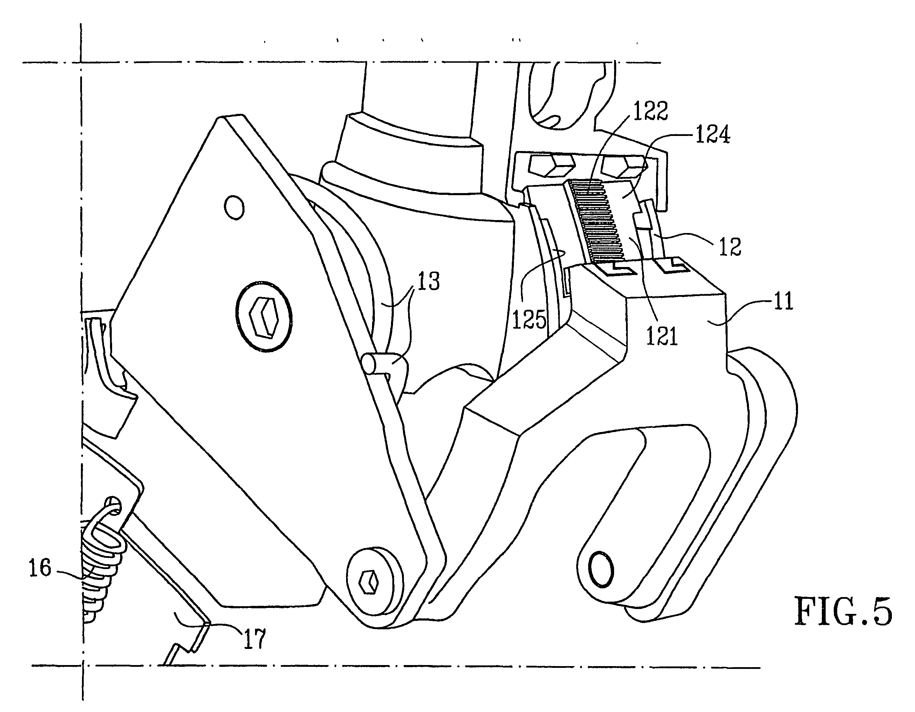

In Fig. 5 is shown in a perspective view substantially corresponding to the position for Fig. 3, how the bearing housing 12 and the latch device 11 are arranged in relation to each other.

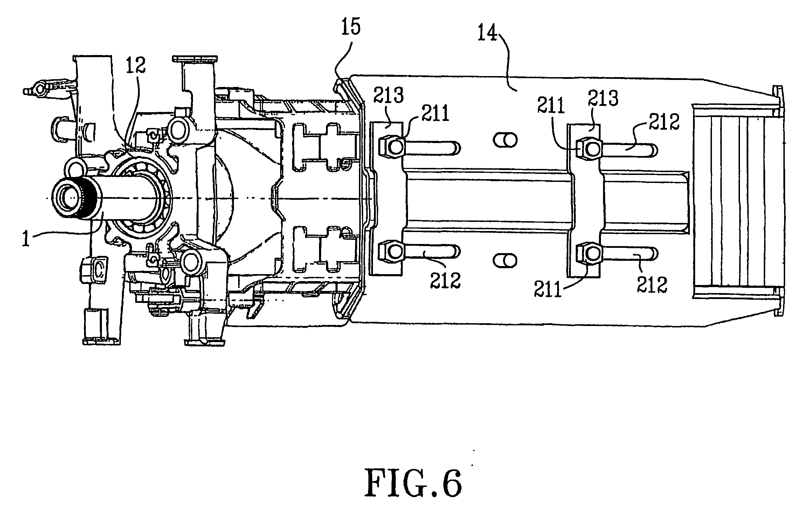

In Fig. 6 is shown in a view from above how the attachment panel 14 is fixedly attached to the upper side of the prism panel 15 by means of at least one joint. In the preferred embodiment this joint incorporates four bolts 211 and four through-holes 212 in the attachment panel 14, and four through-holes in the prism panel 15, with a bolt for each pair of such holes. The joint furthermore incorporates washers 213 or the like. The holes in the prism panel 15 for each bolt 211 are preferably made traditionally circular. However, the holes 212 in the attachment panel 14 are made oblong and they are furthermore narrowing in longitudinal direction. The wider part of the holes 212 is provided nearest to the end of the prism part 15, which is adjacent to the bearing housing 12. The holes are narrowing in longitudinal direction towards the end of the prism part 15, which is fixedly attached to the car body. Furthermore, the wider part of the holes 212 as seen in longitudinal direction are at least so wide that the bolts 211 can be mounted therein without problems, and after mounting the bolts 211 are preferably firmly arranged in the substantially widest part of its associated elongated hole 212. Due to the narrowing extension of the longitudinal holes 212 from the initial position, the bolts 211 will be clamped at mutual displacement in longitudinal direction until the walls of the holes and/or the bolt shanks are deformed. As can be seen e.g. from Fig. 1, one end of a tension spring 16 is attached to the prism panel 15, which spring constitutes a counter balancing spring, which makes the device spring back after it has been pressed down.

Hereinafter the function of the device 10 in accordance with the invention will be further described.

At a collision force which is big enough, the steering wheel, which is pointing towards the chest of the driver, will be hit by the driver, when the driver due to his kinetic energy will continue a forward motion towards the steering wheel. The steering wheel is arranged on a steering column 1.

In accordance with the preferred embodiment of the invention the screw 115 between the first 111 and the second parts 112 of the latch device 11 (Fig. 4) is initially exerted to such a big force that the screw shank breaks when the collision force exceeds a predetermined level. After that, the first part 111 starts to move relative to the second part 112, which like the remainder of the latch device 11 is fixedly arranged in connection to the car body. Hereby is achieved that the first, movable part 111 by aid of the projecting edges 116 will subject the second, immobile part 112 to cutting, and therefore to cutting material removal at least in an edge zone 117 between the said parts 111, 112, which are then in mutual mechanical contact. The cutting process means that kinetic energy in the first part 111 is absorbed, when the movement of the first part is retarded due to the consumption of energy in connection to the cutting material removal which takes place, and a braking of the motion of the first part 111 is consequently obtained. (In this manner the device 10 thus absorbs kinetic energy at a collision, thus that an efficient and resilient retardation of the live force hitting the steering wheel is achieved).

During the first cutting process the angle between steering column 1 and the vertical is reduced as the steering column pivots about the turning axis 2 in an upward motion as a consequence of the movement of the first part 111, which via the gear mesh between the toothed portions 113, 122 is in a rigid engagement with the bearing housing 12, which means that the bearing housing 12 and therefore also the steering column are displaced. (Thus the steering column is displaceable in vertical direction, for instance from the level of the belly of the driver to the chest of the driver.)

A second cutting process, following the first cutting process, according to a preferred embodiment of the invention, is initiated in that one further screw 123 (see Fig. 3) is subjected to breakage when the collision force exceeds a predetermined level, whereby the bearing housing 12 moves, whereas the part 121 provided externally on the bearing housing 12 is immobile, as it is fixedly attached to the latch device 11. Consequently the bearing housing 12 subjects the part 121, which is externally arranged thereon to a cutting action by means of the projecting edges 124 in at least an edge zone 125 between the parts 121, 12 mentioned, which are then in mutual mechanical contact. During the second cutting process the angle between the steering column and the vertical is further reduced, as the bearing housing 12 which is rigidly supported on the steering column, will be displaced.

In the embodiment preferred the cutting processes and the deformation processes, the latter of which will be further described hereinafter, are arranged to occur at prescribed angles during the pivoting of the steering column towards and past the vertical plane.

Thus the arrangement can be dimensioned to give at a collision an optional number of cutting processes in the contact zones between a plurality of parts in the device 10 according to the invention. These cutting processes can be arranged to take place substantially at the same time or at a particular predetermined sequence as stated above.

The mutual displacement between the parts forming part of the device 10 can also be constituted of at least one rotational movement, one translatory movement or a combined rotational and translatory movement. The cutting processes furthermore can be arranged to occur at least at one predetermined position or at least at one angle during the mutual displacement between the parts.

Of course it is also possible to adjust the ability of the steering column of absorbing kinetic energy by means of the volume of goods, which is subjected to cutting in the second parts 112, 12 according to the invention. This is preferably achieved by variation of the thickness of goods and the width of the contact zones 117, 124, the radius of the fillets at the edges 116, 125, etcetera.

In the preferred embodiment of the invention the lower overlaying part of the bearing housing 12 is adapted to hit the prism part 15 at the upward pivoting motion of the steering column. Hereby will occur a collision with the prism part, which consequently is subjected to an energy absorbing deformation in connection with the cutting processes, see Fig. 6.

A further deformation process - a so called "crash-slide-process" - is initiated before or in connection to the above mentioned cutting processes in the preferred embodiment, when the device 10 and the retardation force tend to move the steering wheel with the steering column mainly in the longitudinal direction of the attachment panel towards the car body. The bolts 212, which form part of the connection between the attachment panel 14 and the prism panel 15 are thus urged towards the narrowing part of the longitudinal hole 212 in the attachment panel. In this manner is effected a retarding and energy absorbing deformation of the holes 212.

In this manner it thus is possible to achieve at least a predetermined deformation process which is absorbing kinetic energy with at least another part of the device and/or at least another further component in connection to the steering column in connection to the said cutting processes.

In a preferred embodiment the parts incorporated in the device 10 can be formed from different materials having substantially different strength, which can contribute in an advantageous manner to the mentioned cutting and deformation processes.

Thus the invention is not limited to the embodiments shown but can be varied in a number of different ways, e.g. by combination of two or more of the embodiments shown, without departing from the scope of the attached claims, and the device and the method can be implemented in a number of different manners depending on application, functional units, requirements and specifications, etcetera.

## Claims

1. A device (10) for absorbing kinetic energy at systems, which are subjected to stress at collision, incorporating at least a first part (111; 12) and a second part (112;124), whereby the first (111;12) and the second parts (112;124) under influence of a collision force are arranged to make a mutual movement, whereby this movement at least partly causes a cutting in at least one contact zone (117,125) between said first and second parts thus that one of the parts retards the other part by means of cutting of material,
***characterized** therein*
that the first and the second parts (111, 12;112,124) are pivotably interconnected, and that the device (10) incorporates a latch device (11), which in turn incorporates the first and the second part (111, 112), whereby the first part is constituted by a part movably arranged internally on the latch device and provided with a toothed joint (113), and the other part is constituted by the remaining part of the latch device.

2. A device as claimed in claim 1,
***characterized** therein*
that the part (111) which is movable internally on the latch device (11) is arranged to subject at least the remaining part (112) of the latch device to cutting in a contact zone (117) at a mutual displacement between the parts mentioned, such as at a collision, thus that the remaning latch device retards the part, which is movable internally on the latch device.

3. A device as claimed in claim 1 or 2,
***characterized** therein*
that the device (10) incorporates a bearing housing (2), which is provided with an externally fixedly arranged part (121), which in turn is equipped with an external gear portion (122) corresponding to the gear portion (113) of the part (111), which is movable internally on the latch device.

4. A device according to anyone of claims 1 to 3,
***characterized** therein,*
that the part (111), which is movably arranged internally on the latch device (11) with a gear portion (113) is arranged in a rigid connection with a toothed portion (122) on the part (121) which is fixedly arranged externally on the bearing housing (12).

5. A device according to anyone of claims 1 to 4,
***characterized** therein,*
that the part which is fixedly arranged externally on the bearing housing (12) is adapted to subject at least the bearing housing (12) for cutting in at least a contact zone (125) between said parts at a mutual displacement, such as a collision, thus that the bearing housing (12) is retarding the part (121) which is fixedly arranged externally on the bearing housing.

6. A device according to anyone of claims 1 to 5,
***characterized** therein,*
that the device furthermore incorporates an eccentric device (18), which is provided internally between the said latch device (11) and the bearing housing (12), whereby the eccentric device (18) and a spring device (19) are adapted also at a collision to maintain the toothed portions (113, 122) and therefore the latch device (11) in engagement with the bearing housing (12).

7. A device according to anyone of claims 1 to 6,
***characterized** therein,*
that the device furthermore incorporates an air cylinder for releasing the load of the spring device (19) on the toothed portions (113, 122) forming the toothed joint, for permitting a deliberate adjustment of the inclination and height of the steering column (1).

8. A device according to claim 1,
***characterized** therein,*
that at least one of the parts (115) of the device furthermore is forming part of a predetermined deformation process with at least one part (212) or at least a further component, in connection to the said cutting process.

9. A device according to claim 1,
***characterized** therein,*
that the bearing housing (12) is arranged at the end of the pivoting movement to hit a prism part (15) at the displacement of the system, whereby an energy absorbing deformation takes place also in connection to the cutting processes.

10. A device according to claim 9,
***characterized** therein,*
that the prism part (15) is attached to the bearing housing (12) by means of at least one connection.

11. A device according to claim 10,
***characterized** therein,*
that said connection incorporates at least one bolt (211) and at least one through-hole (212) for said bolt, and that said hole is made oblong in the longitudinal direction, whereby said hole is adapted to be subjected to deformation and thereby energy absorption when the bolt is pressed in the narrowing direction of the hole at a collision.

## Patentansprüche

1. Vorrichtung (10) zum Absorbieren von kinetischer Energie bei Systemen, die einer Beanspruchung bei einer Kollision unterworfen sind, mit zumindest einem ersten Teil (111; 12) und einem zweiten Teil (112; 124), wobei das erste (111; 12) und das zweite (112; 124) Teil so angeordnet sind, daß sie unter dem Einfluß einer Kollision eine gegenseitige Bewegung ausführen, wobei diese Bewegung zumindest teilweise ein Einschneiden in zumindest eine Kontaktzone (117, 125) zwischen den genannten ersten und zweiten Teilen zur Folge hat, so daß eines der Teile das andere Teil mittels Schneiden von Material zurückhält, **dadurch gekennzeichnet, daß** das erste und das zweite Teil (111, 12; 112, 124) schwenkbar miteinander verbunden sind, und daß die Vorrichtung (10) eine Verriegelungseinrichtung (11) umfaßt, die ihrerseits das erste und das zweite Teil (111, 112) umfaßt, wobei das erste Teil durch ein Teil gebildet ist, das bewegbar intern auf der Verriegelungseinrichtung angeordnet ist und mit einem gezahnten Anschluß (113) versehen ist, und wobei das andere Teil durch das verbleibende Teil der Verriegelungseinrichtung gebildet ist.

2. Vorrichtung nach Anspruch 1, **dadurch gekennzeichnet, daß** das Teil (111), das intern auf der Verriegelungseinrichtung (11) bewegbar ist, so angeordnet ist, daß es zumindest das verbleibende Teil (112) der Verriegelungseinrichtung einem Schneidvorgang in einer Kontaktzone (117) bei einer gegenseitigen Verlagerung zwischen den genannten Teilen unterwirft, etwa bei einer Kollision, so daß die verbleibende Verriegelungseinrichtung das Teil zurückhält, das intern auf der Verriegelungseinrichtung bewegbar ist.

3. Vorrichtung nach Anspruch 1 oder 2, **dadurch gekennzeichnet, daß** die Vorrichtung (10) ein Lagergehäuse (12) aufweist, das mit einem außerhalb fest angeordneten Teil (121) versehen ist, das seinerseits mit einem externen Verzahnungsabschnitt (122) versehen ist, der dem Verzahnungsabschnitt (113) des Teils (111) entspricht, das intern auf der Verriegelungseinrichtung bewegbar ist.

4. Vorrichtung nach einem der Ansprüche 1 bis 3, **dadurch gekennzeichnet, daß** das Teil (111), welches intern auf der Verriegelungseinrichtung (11) mit einem Verzahnungsabschnitt (113) bewegbar angeordnet ist, in einer starren Verbindung mit einem verzahnten Abschnitt (122) auf dem Teil (121) angeordnet ist, welches extern fest auf dem Lagergehäuse (12) angeordnet ist.

5. Vorrichtung nach einem der Ansprüche 1 bis 4, **dadurch gekennzeichnet, daß** das Teil, welches extern fest auf dem Lagergehäuse (12) angeordnet ist, so angepaßt ist, daß es zumindest das Lagergehäuse (12) einem Schneidvorgang in zumindest einer Kontaktzone (125) zwischen den genannten Teilen bei einer gegenseitigen Verlagerung unterwirft, wie etwa einer Kollision, so daß das Lagergehäuse (12) das Teil (121) zurückhält, welches extern fest auf dem Lagergehäuse angeordnet ist.

6. Vorrichtung nach einem der Ansprüche 1 bis 5, **dadurch gekennzeichnet, daß** die Vorrichtung weiterhin eine exzentrische Einrichtung (18) aufweist, die intern zwischen der genannten Verriegelungseinrichtung (11) und dem Lagergehäuse (12) angeordnet ist, wobei die exzentrische Einrichtung (18) und eine Federeinrichtung (19) so angepaßt sind, daß sie bei einer Kollision die gezahnten Abschnitte (113, 122) und daher die Verriegelungseinrichtung (11) in Zusammenwirken mit dem Lagergehäuse (12) halten.

7. Vorrichtung nach einem der Ansprüche 1 bis 6, **dadurch gekennzeichnet, daß** die Vorrichtung weiterhin einen Luftzylinder aufweist, um die Belastung der Federeinrichtung (19) auf die gezahnten Abschnitte (113, 122), die den gezahnten Anschluß bilden, zu entlasten, um eine bewußte Einstellung der Neigung und der Höhe der Lenksäule (1) zu ermöglichen.

8. Vorrichtung nach Anspruch 1, **dadurch gekennzeichnet, daß** zumindest eines der Teile (115) der Vorrichtung weiterhin einen Teil eines vorbestimmten Verformungsprozesses bildet, wobei sich zumindest ein Teil (212) oder zumindest eine weitere Komponente in Verbindung mit dem genannten Schneidvorgang befindet.

9. Vorrichtung nach Anspruch 1, **dadurch gekennzeichnet, daß** das Lagergehäuse (12) so angeordnet ist, daß es am Ende der Schwenkbewegung auf ein prismaförmiges Teil (15) bei der Verlagerung des Systems trifft, wodurch eine energieabsorbierende Verformung auch in Verbindung mit den Schneidvorgängen stattfindet.

10. Vorrichtung nach Anspruch 9, **dadurch gekennzeichnet, daß** das prismaförmige Teil (15) mittels zumindest einer Verbindung an dem Lagergehäuse (12) befestigt ist.

11. Vorrichtung nach Anspruch 10, **dadurch gekennzeichnet, daß** die genannte Verbindung zumindest einen Bolzen (211) und zumindest eine Durchgangsöffnung (212) für den Bolzen aufweist, und daß die genannte Öffnung länglich in der longitudinalen Richtung ausgebildet ist, wobei die genannte Öffnung angepaßt ist, um einer Verformung unterworfen zu werden und **dadurch** einer Energieabsorption, wenn auf den Bolzen in der schmalen Richtung der Öffnung bei einer Kollision ein Druck ausgeübt wird.

## Revendications

1. Dispositif (10) d'absorption d'énergie cinétique de systèmes qui sont exposés à une contrainte à la collision, incorporant au moins une première partie (111 ; 12) et une deuxième partie (112 ; 124), la première partie (111 ; 12) et la deuxième partie (112 ; 124) sous l'influence d'une force de collision étant agencées pour effectuer un mouvement mutuel, ce mouvement causant au moins en partie un découpage dans au moins une zone de contact (117 ; 125) entre lesdites première et deuxième parties, de sorte que l'une des ces parties retarde l'autre partie au moyen d'un découpage de matériau,
**caractérisé en ce que**
les première et deuxième parties (111, 12 ; 112, 124) sont interconnectées de manière pivotante, et **en ce que** le dispositif (10) incorpore un dispositif de verrouillage (11) qui à son tour incorpore les première et deuxième parties (111 ; 112), la première partie étant constituée par une partie agencée intérieurement sur le dispositif de verrouillage de manière déplaçable et équipée d'un joint denté (113), et l'autre pièce étant constituée par la partie restante du dispositif de verrouillage.

2. Dispositif selon la revendication 1,
**caractérisé en ce que**
la partie (111) qui est intérieurement déplaçable sur le dispositif de verrouillage (11) est agencée pour exposer au moins la partie restante (112) du dispositif de verrouillage au découpage dans une zone de contact (117) lors d'un déplacement mutuel entre les parties mentionnées, comme lors d'une collision, le dispositif de verrouillage restant retardant ainsi la partie qui est intérieurement déplaçable sur le dispositif de verrouillage.

3. Dispositif selon la revendication 1 ou la revendication 2,
**caractérisé en ce que**
le dispositif (10) incorpore un logement de palier (2) qui est équipé d'une partie agencée de manière extérieurement fixe (121) qui à son tour est équipée d'une partie d'engrenage externe (122) qui correspond à la partie d'engrenage (113) de la partie (111) qui est intérieurement déplaçable sur le dispositif de verrouillage.

4. Dispositif selon l'une quelconque des revendications 1 à 3,
**caractérisé en ce que**
la pièce (111) qui est agencée de manière intérieurement déplaçable sur le dispositif de verrouillage (11) avec une partie d'engrenage (113) est agencée dans une connexion rigide avec une portion dentée (122) sur la partie (121) qui est agencée de manière extérieurement fixe sur le logement de palier (12).

5. Dispositif selon l'une quelconque des revendications 1 à 4,
**caractérisé en ce que**
la partie qui est agencée de manière extérieurement fixe sur le logement de palier (12) est adaptée pour exposer au moins le logement de palier (12) à un découpage dans au moins une zone de contact (125) entre lesdites parties lors d'un déplacement mutuel, tel que lors d'une collision, de sorte que le logement de palier (12) retarde la partie (121) qui est agencée de manière extérieurement fixe sur le logement de palier.

6. Dispositif selon l'une quelconque des revendications 1 à 5,
**caractérisé en ce que**
le dispositif incorpore en outre un dispositif excentrique (18) qui est fourni intérieurement entre ledit dispositif de verrouillage (11) et le logement de palier (12), le dispositif excentrique (18) et un dispositif à ressort (19) étant également adaptés lors d'une collision pour maintenir les parties dentées (113, 122) et ainsi le dispositif de verrouillage (11) en engagement avec le logement de palier (12).

7. Dispositif selon l'une quelconque des revendications 1 à 6,
**caractérisé en ce que**
le dispositif incorpore en outre un cylindre à air comprimé pour libérer la charge du dispositif à ressort (19) sur les parties dentées (113, 122) formant le joint denté, pour permettre un ajustement délibéré de l'inclinaison et de la hauteur de la colonne de direction (1).

8. Dispositif selon la revendication 1,
**caractérisé en ce que**
au moins une des parties (115) du dispositif fait en outre partie d'un processus de déformation prédéterminé avec au moins une pièce (212) ou au moins un composant supplémentaire en rapport avec ledit processus de découpage.

9. Dispositif selon la revendication 1,
**caractérisé en ce que**
le logement de palier (12) est agencé à l'extrémité du mouvement pivotant pour frapper une partie prismatique (15) lors du déplacement du système, une déformation absorbant l'énergie prenant également place en rapport avec les processus de découpage.

10. Dispositif selon la revendication 9,
**caractérisé en ce que**
la partie prismatique (15) est attachée au logement de palier (12) au moyen d'au moins une connexion.

11. Dispositif selon la revendication 10,
**caractérisé en ce que**
ladite connexion incorpore au moins un boulon (211) et au moins un orifice de passage (212) pour ledit boulon et **en ce que** ledit orifice est fabriqué de forme oblongue dans la direction longitudinale, ledit orifice étant adapté pour être exposé à une déformation et par là même à une absorption d'énergie quand le boulon est pressé dans la direction de diminution de l'orifice lors d'une collision.
